# EUROPÄISCHE PATENTSCHRIFT

(11) **EP 3 714 507 B1**
(45) Veröffentlichungstag und Bekanntmachung des Hinweises auf die Patenterteilung: **18.05.2022**
(21) Anmeldenummer: 18804523.1
(22) Anmeldetag: 31.10.2018
(51) Int. Cl.: H01M 10/6556, H01M 10/6568

(54) **VERFAHREN ZUM HERSTELLEN EINES KÜHLSYSTEMS**
METHOD OF MANUFACTURING A COOLING SYSTEM
PROCÉDÉ DE FABRICATION D'UN SYSTÈME DE REFROIDISSEMENT

(30) Priorität: 22.11.2017 DE 102017220862
(43) Veröffentlichungstag der Anmeldung: 30.09.2020
(73) Patentinhaber: Audi AG, 85045 Ingolstadt (DE)
(72) Erfinder: WEISS, Thomas, 85113 Böhmfeld (DE); FRAUENHOFER, Michael, 86551 Aichach (DE); SCHIELER, Oliver, 67657 Kaiserslautern (DE)
(86) Internationale Anmeldenummer: PCT/EP2018/079859
(87) Internationale Veröffentlichungsnummer: WO 2019/101487

(56) Entgegenhaltungen:
- DE-A1-102010 018 040
- DE-A1-102014 017 031
- US-A1- 2014 305 622

## Beschreibung

Die Erfindung betrifft ein Verfahren zum Herstellen eines Kühlsystems sowie ein Kühlsystem für mindestens eine Batterie.

Zum Kühlen einer Batterie sind unterschiedliche Varianten anwendbar. Dabei wird zum Kühlen bspw. eine Kühlflüssigkeit verwendet, die entweder direkt mit einer Zelle der Batterie in Verbindung gebracht wird oder durch Rohre und/oder Profile geleitet wird. Falls für die Kühlflüssigkeit Rohre verwendet werden, ist es weiterhin möglich, diese direkt an der mindestens einen Zelle der Batterie anzubringen, wodurch eine Distanz zu der mindestens einen Batterie gering gehalten wird. Falls jedoch das Rohr beschädigt werden sollte, besteht hierbei die Gefahr eines Batteriebrands. Daher ist es alternativ möglich, ein Rohr außen an der mindestens einen Zelle anzufügen, wobei jedoch ein Abstand zwischen der Kühlflüssigkeit und der mindestens einen Zelle und somit ein thermischer Widerstand erhöht wird. Es ist möglich, die für die Kühlflüssigkeit vorgesehenen Rohre bspw., wie im Fall von sogenannter "weißer Ware", durch ein Roll-Bond-Verfahren herzustellen und etwa auf ein Gehäuse für die mindestens eine Zelle aufzulöten.

Allerdings ist hierbei zu berücksichtigen, dass zwischen den Rohren und der mindestens einen Zelle eine große Anzahl von Wärmeübergängen gebildet wird, wobei durch jeweils einen Wärmeübergang eine Effizienz einer durchzuführenden Kühlung reduziert wird. Außerdem sind Rohre mit dünnen Profilen in der Herstellung kostenintensiv und erfordern einen zusätzlichen Prozess zum Anbinden an das Gehäuse. Weiterhin ist es möglich, Rohre oder entsprechende Profile in einer Batteriewanne auszulegen. Allerdings besteht auch hier die Gefahr, dass bei einer Beschädigung der Rohre aus diesen Kühlflüssigkeit austritt, wodurch die Batterie in Brand geraten kann.

Falls eine Kühlanordnung an einem Boden oder einem Deckel der Batteriewanne angeordnet werden soll, wird dieser durch Löten als Fügeverfahren an der Batteriewanne befestigt. Allerdings wird zum Aufschmelzen eines Lots eine Temperatur von bis zu 600 °C benötigt, wodurch ein Wärmeeintrag in Bleche der Batteriewanne und/oder der Kühlanordnung sehr hoch ist, wodurch sich ein thermischer Verzug ergeben kann. Dies führt unmittelbar zu einem größeren Abstand zwischen der Kühlanordnung und der mindestens einen Zelle der Batterie, wodurch wiederum eine Leistungsfähigkeit der Kühlanordnung reduziert wird. Weiterhin ist zu beachten, dass zum Fertigen der Kühlanordnung, die eine Abmessung von bspw. einem Meter mal zwei Metern aufweisen kann, ein entsprechend großer Ofen benötigt wird, der weiterhin große Energiemengen benötigt.

Falls die Kühlanordnung durch das Roll-Bond-Verfahren hergestellt werden sollte, ist eine geometrische Freiheit bei einer Konstruktion der Kühlanordnung eingeschränkt, da mit dem Roll-Bond-Verfahren lediglich Rohre mit einem homogenen Querschnitt erzeugt werden können, durch die jedoch keine gleichmäßige Kühlung erreicht werden kann.

Ein Energiespeichermodul für eine Vorrichtung zur Spannungsversorgung ist aus der Druckschrift DE 10 2011 104 433 A1 bekannt. Dieses Energiespeichermodul weist einen Hauptkörper auf, in den ein Fluidkanal für ein Fluid integriert ist, wobei der Hauptkörper über eine wärmeleitende Verklebung mit einem Zellmodul der Vorrichtung verbunden ist.

Ein Temperaturmanagementsystem für eine Batterie ist aus der Druckschrift WO 2012/160573 A2 bekannt. Dieses umfasst mindestens zwei Platten, die über einen thermisch leitfähigen Klebstoff und durch Laserschweißen miteinander verbunden sind.

Die aus der Druckschrift DE 10 2013 011 895 A1 bekannte Aufnahmevorrichtung zur Aufnahme mindestens einer Energiespeicherkomponente umfasst einen Aufnahmeraum zur Aufnahme der Energiespeicherkomponente, der durch mindestens ein Aufnahmeteil begrenzt ist, dessen Oberfläche zumindest abschnittsweise wenigstens einen Kühlmittelkanal für eine Kühlmittelkanalstruktur aufweist.

Aus der Druckschrift DE 10 2014 017 031 A1 sind ein Wärmeträgerelement und ein Verfahren zur Wärmeübertragung bekannt.

Eine thermisch gemanagte Batterie ist in der Druckschrift US 8 115 450 B2 beschrieben.

US 2014/305622 offenbart ein Verfahren zum Herstellen einer Wandung eines Kühlsystems für eine Batterie, bei dem ein primäres Bauteil und mindestens ein sekundäres Bauteil an mindestens zwei Stellen miteinander verklebt werden, wobei durch die Innenwände der Bauteile ein Kühlmittelkanal begrenzt wird.

Vor diesem Hintergrund war es eine Aufgabe, für eine Batterie auf effiziente Weise ein Kühlsystem bereitzustellen.

Diese Aufgabe wird durch ein Verfahren und ein Kühlsystem mit den Merkmalen der unabhängigen Patentansprüche gelöst. Ausführungsformen des Verfahrens und des Kühlsystems gehen aus den abhängigen Patentansprüchen hervor.

Das erfindungsgemäße Verfahren ist zum Herstellen mindestens einer Wandung eines Kühlsystems für mindestens eine Batterie vorgesehen, wobei zum Herstellen der mindestens einen Wandung ein primäres Bauteil und mindestens ein sekundäres Bauteil verwendet werden, die beide Oberflächen aufweisen. Auf mindestens einer ersten Stelle einer Oberfläche mindestens eines der Bauteile wird ein kühlmittelbeständiger und/oder kühlmitteldichter Klebstoff aufgetragen. Auf mindestens einer zweiten Stelle der Oberfläche mindestens eines der Bauteile wird ein strukturfestigender Klebstoff aufgetragen. Weiterhin werden das primäre Bauteil und das mindestens eine sekundäre Bauteil aneinandergefügt und über beide Klebstoffe miteinander verklebt, wobei aus den derart miteinander verbundenen Bauteilen die mindestens eine Wandung gebildet und/oder bereitgestellt wird. Dabei wird durch jeweils eines der Bauteile, d. h. durch jeweils einen Bereich einer jeweiligen Oberfläche eines Bauteils, ein Abschnitt einer Innenwand mindestens eines Kühlmittelkanals des Kühlsystems bereitgestellt, der durch die Bauteile begrenzt und durch den kühlmittelbeständigen und/oder kühlmitteldichten Klebstoff als Dichtung abgedichtet wird. Dabei bildet sich eine derartige Dichtung nach einem Aushärten des kühlmittelbeständigen Klebstoffs. Außerdem werden die Bauteile unabhängig von dem als Dichtung dienenden kühlmittelbeständigen Klebstoff über den strukturfestigenden Klebstoff aneinander bzw. miteinander mechanisch befestigt, wobei aus dem strukturfestigenden Klebstoff nach einem Aushärten Befestigungsstellen gebildet werden.

Hierbei ist vorgesehen, dass die mindestens eine erste Stelle und die mindestens eine zweite Stelle sowohl bei einem Auftragen der Klebstoffe sowie bei einem Aneinanderfügen der Bauteile voneinander beabstandet und/oder getrennt werden bzw. sind, wobei die beiden Klebstoffe ebenfalls voneinander beabstandet und/oder getrennt werden.

Gemäss der Erfindung werden ein primäres Bauteil, das definitionsgemäß eine ausgedehnte Oberfläche aufweist, und ein erstes sekundäres Bauteil verwendet, das, wie das primäre Bauteil, definitionsgemäß ebenfalls eine ausgedehnte Oberfläche aufweist, zu der Wandung verbunden. In der Regel ist jedes Bauteil aus einem Körper gebildet, der durch mindestens eine Außenseite begrenzt ist, die wiederum eine Oberfläche aufweist. Weiterhin ist mindestens eine Außenseite bzw. Oberfläche des Körpers eines jeweiligen Bauteils durch seine Länge und seine Breite definiert, wobei weiterhin zu berücksichtigen ist, dass der Körper des jeweiligen Bauteils eine Höhe aufweist, die üblicherweise senkrecht zu der besagten Außenseite bzw. Oberfläche orientiert ist. Bei einem Bauteil, das die ausgedehnte Oberfläche aufweist, ist vorgesehen, dass dessen ausgedehnte Oberfläche sowohl eine Länge als auch eine Breite aufweist, die jeweils größer als die Höhe des Körpers des Bauteils ist. Üblicherweise ist sowohl die Länge als auch die Breite jeweils um ein Vielfaches, bspw. um mindestens ein Zehnfaches oder Hundertfaches, größer als seine Höhe.

Weiterhin wird der Abschnitt der Innenwand, die zum Begrenzen des mindestens einen Kühlmittelkanals vorgesehen ist, zunächst als Ausnehmung in die bspw. ausgedehnte Oberfläche mindestens eines der beiden Bauteile, d. h. in die bspw. ausgedehnte Oberfläche des primären Bauteils und/oder des mindestens einen sekundären Bauteils, bspw. durch Tiefziehen eingebracht, wobei der kühlmittelbeständige Klebstoff entlang von Rändern des Abschnitts der Innenwand aufgetragen wird, der bereits in die Oberfläche des mindestens einen Bauteils eingebracht ist. Somit ist es möglich, durch Formen und/oder Verformen der bspw. ausgedehnten Oberfläche den Abschnitt der Innenwand zu definieren, der bspw. gebogen und/oder als Ausnehmung, bspw. als Nut, in der Oberfläche ausgebildet ist. Es ist ebenfalls möglich, dass mindestens eines der beiden Bauteile, d. h. das bspw. erste sekundäre Bauteil oder das primäre Bauteil, die beide ausgedehnte Oberflächen aufweisen, als ein Innenteil der mindestens einen Wandung eines Gehäuses verwendet wird, in dem die mindestens eine Batterie angeordnet wird, wohingegen das andere der beiden Bauteile, d. h. das primäre Bauteil oder das bspw. erste sekundäre Bauteil, als Abdeckung bzw. Außenteil der mindestens einen Wandung des Gehäuses verwendet wird. Dabei ist das Innenteil mindestens einer Batterie zugewandt und das Außenteil von der mindestens einen Batterie abgewandt.

Gemäss der Erfindung wird mindestens ein zweites sekundäres Bauteil verwendet, das als Abstandshalter zwischen dem primären Bauteil und dem ersten sekundären Bauteil verwendet wird. Das zweite sekundäre Bauteil wird einerseits mit dem primären Bauteil über den kühlmittelbeständigen Klebstoff direkt verklebt und andererseits über den kühlmittelbeständigen Klebstoff direkt mit dem ersten sekundären Bauteil verklebt, wobei der mindestens eine Abschnitt der Innenwand des mindestens einen Kühlmittelkanals durch das zweite weitere Bauteil begrenzt und durch den kühlmittelbeständigen Klebstoff zwischen jeweils zwei Bauteilen abgedichtet wird.

Hierbei ist es weiterhin möglich, dass das mindestens eine zweite sekundäre Bauteil und mindestens eines der beiden weiteren Bauteile, d. h. das primäre Bauteil und/oder das erste sekundäre Bauteil, zusätzlich über den strukturfestigenden Klebstoff miteinander verklebt, und somit miteinander zu der mindestens einen Wandung verbunden werden. Dabei wird der mindestens eine Kühlmittelkanal und der kühlmittelbeständige Klebstoff von dem strukturfestigenden Klebstoff beabstandet bzw. getrennt.

Mindestens einer der Klebstoffe, d. h. der kühlmittelbeständige Klebstoff und/oder der strukturfestigende Klebstoff, wird in Ausgestaltung zusätzlich erwärmt und ausgehärtet. Dabei wird aus dem kühlmittelbeständigen Klebstoff an der mindestens einen ersten Stelle eine Dichtung und aus dem strukturfestigenden Klebstoff an der mindestens einen zweiten Stelle eine mechanisch stabile Befestigungsstelle gebildet.

Üblicherweise ist vorgesehen, dass der kühlmittelbeständige Klebstoff bahnförmig und/oder linienförmig auf der mindestens einen ersten Stelle der bspw. ausgedehnten Oberfläche des mindestens einen Bauteils aufgetragen wird. Dabei wird zwischen jeweils zwei nachfolgend aneinandergefügten Bauteilen eine Linie aus kühlmittelbeständigem Klebstoff gebildet, wobei die Linie bzw. Bahn aus dem kühlmittelbeständigen Klebstoff sogleich eine Dichtung des mindestens einen Kühlmittelkanals zwischen den Bauteilen bildet. Der strukturfestigende Klebstoff wird bspw. zwischen mindestens zwei ersten Stellen an der mindestens einen zweiten Stelle auf der Oberfläche aufgetragen. Die mindestens eine zweite Stelle ist zwischen zwei unmittelbar benachbarten Kühlmittelkanälen und dem kühlmittelbeständigen Klebstoff angeordnet, der zum Abdichten der unmittelbar benachbarten Kühlmittelkanäle ausgebildet ist.

Mindestens eines der Bauteile ist aus einem Metall oder einem Kunststoff gebildet.

Außerdem ist vorgesehen, dass die Bauteile, die über die Klebstoffe miteinander zu der mindestens einen Wandung verklebt werden, lediglich über die Klebstoffe miteinander verbunden und/oder aneinander befestigt werden. Somit ist es möglich, auf weitere Verbindungs- oder Befestigungsmaßnahmen für die Bauteile aneinander, bspw. auf Löten oder Schweißen, zu verzichten, wodurch die Bauteile beim Herstellen bzw. Zusammensetzen des Kühlsystems nur geringfügig oder gar nicht thermisch belastet werden.

Das erfindungsgemäße Kühlsystem zum Kühlen mindestens einer Batterie weist mindestens eine Wandung auf, die ein primäres Bauteil und mindestens sekundäres Bauteil aufweist bzw. aus mindestens zwei Bauteilen gebildet ist, wobei das primäre Bauteil und das mindestens eine sekundäre Bauteil aneinandergefügt und sowohl über einen kühlmittelbeständigen Klebstoff als auch über einen strukturfestigenden Klebstoff miteinander verklebt und zu der mindestens einen Wandung verbunden sind. Dabei ist an mindestens einer ersten Stelle zwischen den mindestens zwei Bauteilen der kühlmittelbeständige und/oder kühlmitteldichte Klebstoff angeordnet, der an der mindestens einen ersten Stelle eine Dichtung bildet. An mindestens einer zweiten Stelle zwischen den mindestens zwei Bauteilen ist der strukturfestigende Klebstoff angeordnet, der an der mindestens einen zweiten Stelle eine Befestigungsstelle bildet. Dabei wird durch jeweils eines der Bauteile ein Abschnitt einer Innenwand mindestens eines Kühlmittelkanals des Kühlsystems bereitgestellt, der durch die Bauteile begrenzt und durch Dichtungen aus dem kühlmittelbeständigen und/oder kühlmitteldichten Klebstoff abgedichtet ist. Die Bauteile sind unabhängig von dem kühlmittelbeständigen Klebstoff über Befestigungsstellen aus dem strukturfestigenden Klebstoff aneinander bzw. miteinander mechanisch befestigt.

Üblicherweise ist eine Ausführungsform des erfindungsgemäßen Kühlsystems durch eine Ausführungsform des erfindungsgemäßen Verfahrens herstellbar.

Das Kühlsystem weist in der Regel mehrere miteinander verbundene Wandungen je aus den mindestens zwei Bauteilen mit jeweils ausgedehnten Oberflächen auf, die dazu ausgebildet sind, die mindestens eine Batterie zu umschließen bzw. zu umhüllen. Dabei ist es möglich, dass die Wandungen zu einem Gehäuse für die mindestens eine Batterie zusammenzufügen sind. Außerdem ist es möglich, Kühlmittelkanäle der Wandungen miteinander direkt und/oder über zusätzliche Abschnitte von Kühlmittelkanälen miteinander zu verbinden.

Das Kühlsystem ist bspw. zum Kühlen mindestens einer Batterie ausgebildet, die zum Versorgen eines bspw. als Kraftfahrzeug ausgebildeten Fahrzeugs mit elektrischer Energie ausgebildet ist. Dabei ist es möglich, dass die elektrische Energie aus der mindestens einen Batterie dazu verwendet wird, eine Elektromaschine des Fahrzeugs mit der elektrischen Energie zu versorgen, wobei es weiterhin möglich ist, dass diese Elektromaschine zum Antreiben und/oder Fortbewegen des Fahrzeugs ausgebildet ist.

Dabei wird die mindestens eine Batterie mit mindestens einem der Bauteile in Kontakt gebracht. In Ausgestaltung ist es möglich, dass mehrere miteinander verklebte Bauteile je nach Definition die Wandung des Gehäuses zur Aufnahme der mindestens einen Batterie bilden, wobei diese Wandung aus den Bauteilen die Kühlmittelkanäle umschließt. Unabhängig davon, wie das vorgestellte Kühlsystem mit der mindestens einen Batterie zu kontaktieren ist, wird durch den mindestens einen Kühlmittelkanal ein Kühlmittel geleitet. Es ist möglich, dass das Kühlsystem mehrere Wandungen aufweist, die von Kühlmittelkanälen durchsetzt sind, wobei die Wandungen sowie die Kühlmittelkanäle der Wandungen miteinander verbunden sind.

Gemäss der Erfindung ist es vorgesehen, den mindestens einen Kühlmittelkanal durch das primäre und das erste sekundäre Bauteil sowie durch mindestens ein zweites sekundäres Bauteil zu begrenzen, wobei das mindestens eine zweite sekundäre Bauteil als Abstandshalter zwischen den ausgedehnten Oberflächen des primären und des ersten sekundären Bauteils angeordnet wird und den mindestens einen Kühlmittelkanal ebenfalls begrenzt.

In Ausgestaltung ist es möglich, den mindestens einen Kühlmittelkanal durch das primäre Bauteil, mindestens ein sekundäres Bauteil, bspw. durch zwei derartige sekundäre Bauteile, d. h. durch das primäre Bauteil sowie das erste und zweite sekundäre Bauteil zu begrenzen. Alternativ oder ergänzend ist es möglich, dass der mindestens eine Abschnitt der Innenwand des mindestens einen Kühlmittelkanals (zusätzlich) als Ausnehmung, bspw. als Nut, in die ausgedehnte Oberfläche des primären Bauteils und/oder des ersten sekundären Bauteils eingebracht wird, wobei dieser mindestens eine Kühlmittelkanal zusätzlich durch das mindestens eine zweite sekundäre Bauteil begrenzt wird.

Mit der mindestens einen Wandung des Kühlsystems wird eine integral geklebte Kühlung der mindestens einen Batterie bereitgestellt.

Zum Verbinden der Bauteile beim Herstellen der mindestens einen Wandung wird ein ansonsten übliches Lötverfahren durch ein Klebeverfahren unter Nutzung von zwei unterschiedlichen Klebstoffen ersetzt. Das primäre und das erste sekundäre Bauteil, die jeweils die ausgedehnte Oberfläche aufweisen, sind je nach materieller Beschaffenheit plattenförmig und/oder scheibenförmig ausgebildet und bspw. als Bleche zu bezeichnen, falls sie aus einem Metall bestehen sollten. In mindestens ein derartiges als Blech ausgebildetes primäres Bauteil wird der Abschnitt der Innenwand für den mindestens einen Kühlmittelkanal bspw. durch Tiefziehen als Ausnehmung in die Oberfläche des Blechs eingebracht. Das primäre Bauteil, in dessen ausgedehnte Oberfläche der Abschnitt der Innenwand des mindestens einen Kühlmittelkanals eingebracht ist, wird in Ausgestaltung auf das mindestens eine sekundäre Bauteil mit der ausgedehnten Oberfläche über die beiden unterschiedlichen Klebstoffe aufgeklebt, wobei es möglich ist, dass das mindestens eine sekundäre Bauteil, bspw. das erste sekundäre Bauteil, bereits als Innenteil der mindestens einen Wandung des Gehäuses für die mindestens eine Batterie vorgesehen, ausgebildet und/oder zu bezeichnen ist. Insgesamt wird durch die im Rahmen des Verfahrens hergestellte mindestens eine Wandung des Kühlsystems bspw. ein Deckel, eine Seitenwand oder ein Boden für das Gehäuse zur Aufnahme der mindestens einen Batterie bereitgestellt, wobei es weiterhin möglich ist, dass dieses Gehäuse als Wanne für die mindestens eine Batterie ausgebildet und/oder zu bezeichnen ist.

Durch das Verfahren ergibt sich unter anderem, dass für die mindestens eine Wandung lediglich eine geringe Anzahl von Wärmeübergängen erforderlich ist. Außerdem wird ein thermischer Verzug der mindestens einen Wandung des Kühlsystems oder des Gehäuses bzw. eines Kastens für die mindestens eine Batterie vermieden. Insgesamt ist zum Herstellen der mindestens einen Wandung keine aufwändige Fertigungstechnik erforderlich, wobei es bspw. möglich ist, das Verfahren auch in einen erweiterten Fertigungsprozess bzw. Montageprozess, der bspw. zum Herstellen des Gehäuses vorgesehen ist, zu integrieren. Außerdem sind das Verfahren und das Kühlsystem energieeffizient. Für die mindestens eine Wandung sind unterschiedliche Formen denkbar. So ist es möglich, dass die beiden Bauteile, d. h. ein primäres Bauteil und ein sekundäres Bauteil, mit den ausgedehnten Oberflächen zueinander deckungsgleich sind, wobei die ausgedehnten Oberflächen beider Bauteile in der Regel dieselbe Größe aufweisen. Falls eine ausgedehnte Oberfläche eines der beiden Bauteile kleiner als jene des anderen der beiden Bauteile sein sollte, wird das andere letztgenannte Bauteil durch das erstgenannte Bauteil nur teilweise abgedeckt.

Außerdem ist es möglich, dass die beiden in der Regel zumindest abschnittsweise zueinander kongruenten ausgedehnten Oberflächen der beiden Bauteile entweder flach bzw. eben sind oder andere geometrische Formen und somit bspw. Biegungen oder Kanten aufweisen. Ergänzend ist es möglich, dass ein Durchmesser des mindestens einen Kühlmittelkanals variabel gewählt und/oder geformt wird. Außerdem ist es möglich, in den mindestens einen Kühlmittelkanal eine Einrichtung zum Regulieren eines Stroms des Kühlmittels, bspw. eine Drossel und/oder ein Ventil, zu integrieren. Bei einer möglichen Umsetzung des Verfahrens wird aus der mindestens einen Wandung der Boden, der Deckel oder eine Seitenwand für das Gehäuse der mindestens einen Batterie, d. h. lediglich einer Batterie oder mehrerer Batterien gebildet.

Dabei wird bspw. in das primäre aus Blech hergestellte Bauteil durch einen vorgeschalteten Prozess, bspw. Tiefziehen, ein Abschnitt der Innenwand des mindestens einen Kühlmittelkanals eingebracht. In einem weiteren Schritt wird auf erhabenen Bereichen der ausgedehnten Oberfläche des primären Bauteils, in die der Abschnitt der Innenwand des mindestens einen Kühlmittelkanals bereits eingebracht ist, wobei diese erhabenen Bereiche den Abschnitt der Innenwand begrenzen, der kühlmittelbeständige bzw. kühlmitteldichtende Klebstoff als Dichtung für den mindestens einen Kühlmittelkanal aufgebracht. Falls der kühlmittelbeständige Klebstoff Lasten, die bspw. aufgrund einer Druckbeaufschlagung des Kühlsystems entstehen, nicht aufnehmen kann, wird zusätzlich noch der strukturfestigende bzw. mechanisch festigende Klebstoff eingesetzt, aus dem sich eine Befestigungsstelle bildet. Dabei ist es vorgesehen, dass der strukturfestigende Klebstoff und der kühlmittelbeständige Klebstoff nicht in direktem Kontakt zueinander stehen, wodurch die durch den kühlmittelbeständigen Klebstoff zu bildende Dichtung von dem strukturfestigendem Klebstoff und der daraus zu bildenden Befestigungsstelle abgeschirmt wird. In einem weiteren Schritt wird das primäre Bauteil auf dem ersten sekundären Bauteil aufgebracht bzw. angeordnet, wobei durch diese beiden bspw. aus Blech gebildeten Bauteile, der Boden, der Deckel oder die Seitenwand für das Gehäuse der mindestens einen Batterie gebildet wird. In Ausgestaltung ist es möglich, dass das erste sekundäre Bauteil mit der ausgedehnten Oberfläche als Wandung einer Batterie ausgebildet ist, so dass das primäre Bauteil direkt auf der Wandung der Batterie aufgeklebt wird. Die beiden Bauteile werden solange miteinander fixiert, bis die Klebstoffe ausgehärtet sind und die mindestens eine Wandung bei Bedarf weiter bearbeitet werden kann. Zum Beschleunigen eines Aushärtens der Klebstoffe wird in die Bauteile zusätzliche Wärme eingebracht.

In Ausgestaltung wird mindestens einer der beiden Klebstoffe bspw. mit einer Raupe, mit einer Applikationsvorrichtung und/oder aus einer Kartusche heraus auf mindestens einem der Bauteile aufgebracht. Außerdem ist es möglich, mindestens einen der Klebstoffe auf mindestens einem der Bauteile über mindestens eine Rolle oder durch ein Siebdruckverfahren aufzubringen.

In Abhängigkeit einer mechanischen Last, die bspw. durch einen Innendruck des Kühlmittels innerhalb des mindestens einen Kühlmittelkanals hervorgerufen wird, ist im Rahmen des Verfahrens vorgesehen, auf den ausgedehnten Oberflächen des primären Bauteils und des ersten sekundären Bauteils, die bspw. als ebene Bleche ausgebildet sind, das mindestens eine zweite sekundäre Bauteil, das als Abstandshalter ausgebildet ist, anzuordnen und die im Rahmen des Verfahrens herzustellende mindestens eine Wandung als verklebte Kühlstruktur auszubilden. Falls hierbei ebene ausgedehnte Oberflächen des primären Bauteils und des ersten sekundären Bauteils über das mindestens eine zweite sekundäre Bauteil miteinander verbunden werden, wobei zuvor darauf verzichtet wurde, in die ebenen Oberflächen Abschnitte der Innenwand des mindestens einen Kühlmittelkanals einzubringen, ist vorgesehen, die Klebstoffe auf den Oberflächen bspw. durch eine Kleberaupe aufzubringen.

Mit der mindestens einen Wandung des Kühlsystems ist es möglich, mindestens eine Batterie, die als Komponente eines Hochvolt-Batteriespeichersystems für ein Elektrofahrzeug vorgesehen ist, bei einer hohen Leistungsentnahme oder einem hohen Leistungseintrag aktiv zu kühlen. Die zu verwendenden Bauteile sowie die Klebstoffe weisen weiterhin eine hohe Wärmeleitfähigkeit und einen geringen Wärmeübergangswiderstand auf. Außerdem ist die Höhe mindestens einer ausgedehnten Oberfläche mindestens eines Bauteils, das der mindestens einen Batterie zuzuwenden ist, gering, wodurch zwischen der zu fördernden Kühlflüssigkeit und der mindestens einen Batterie lediglich ein geringer Abstand vorhanden ist. Es ist möglich, die mindestens eine Wandung bspw. in ein Bodenblech des Gehäuses für die mindestens eine Batterie zu integrieren oder als derartiges Bodenblech auszubilden. Entsprechend ist es möglich, die mindestens eine Wandung als Unterseite bzw. Boden eines als Wanne für die mindestens eine Batterie vorgesehenen Gehäuses aufzukleben. Falls der mindestens eine Kühlmittelkanal während des Betriebs bspw. aufgrund eines Unfalls des Fahrzeugs beschädigt werden sollte, kann keine Kühlflüssigkeit, bspw. kein Kühlwasser, in das Gehäuse für die mindestens eine Batterie eindringen, wodurch ein Brand vermieden wird.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

Figur 1 zeigt aus unterschiedlichen Perspektiven ein primäres und ein sekundäres Bauteil, aus denen bei Durchführung einer ersten Ausführungsform des erfindungsgemäßen Verfahrens eine erste Ausführungsform des erfindungsgemäßen Kühlsystems herstellbar ist.

Figur 2 zeigt in schematischer Darstellung Details von Wandungen weiterer Ausführungsformen des erfindungsgemäßen Kühlsystems.

Die Figuren werden zusammenhängend und übergreifend beschrieben. Gleichen Komponenten sind dieselben Bezugsziffern zugeordnet.

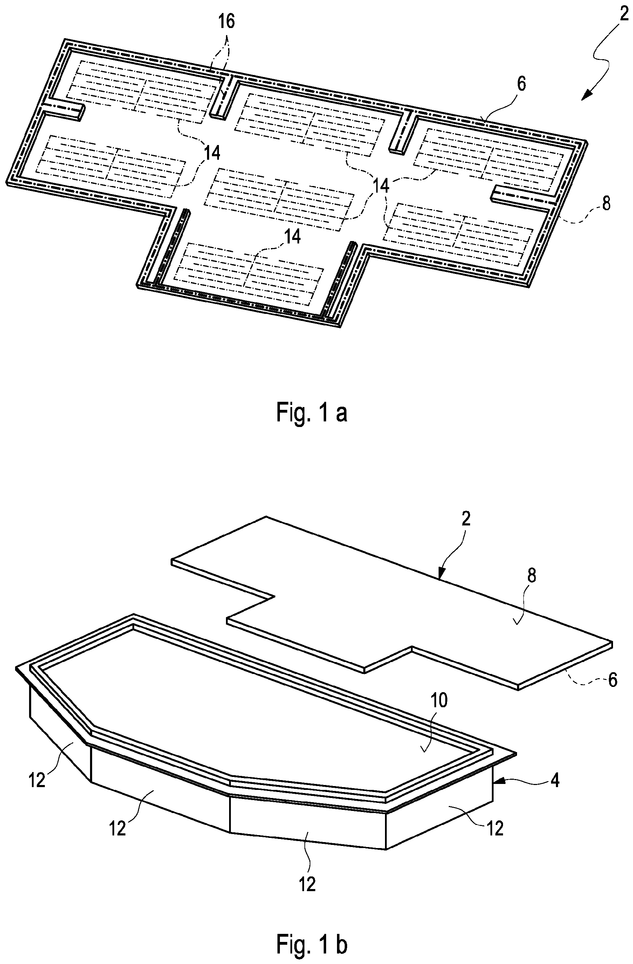

Zum Herstellen der Wandung der ersten Ausführungsform des erfindungsgemäßen Kühlsystems werden ein primäres Bauteil 2, das sowohl in Figur 1a als auch in Figur 1b jeweils schematisch dargestellt ist, sowie ein sekundäres Bauteil 4 verwendet. Dabei zeigt Figur 1a eine erste ausgedehnte Oberfläche 6 des primären Bauteils 2. Dagegen zeigt Figur 1b eine zweite ausgedehnte Oberfläche 8 des primären Bauteils 2, die seiner ersten ausgedehnten Oberfläche 6 abgewandt ist und in Figur 1b die erste ausgedehnte Oberfläche 6 überdeckt. Außerdem zeigt Figur 1b eine ausgedehnte Oberfläche 10 des sekundären Bauteils 4, an der hier mehrere Wandungen bzw. Wandabschnitte 12 angeordnet sind, die senkrecht zu der ausgedehnten Oberfläche 10 des sekundären Bauteils 4 orientiert und von dieser abgewandt sind. In die erste ausgedehnte Oberfläche 6 des primären Bauteils 2 sind hier mehrere nicht weiter dargestellte Ausnehmungen eingefügt, die miteinander verbunden sind und einen Abschnitt einer Innenwand eines hier zusammenhängenden Kühlmittelkanals bilden, wobei an Rändern der Ausnehmungen mehrere Linien 14 aus einem kühlmittelbeständigen Klebstoff aufgetragen sind. Davon getrennt sind auf der ersten Oberfläche 6 des primären Bauteils 2 auch mehrere Linien 16 an strukturfestigendem Klebstoff aufgetragen, wobei diese Linien 16 hier auch an Rändern der ersten ausgedehnten Oberfläche 6 aufgetragen und/oder angeordnet sind.

Zum Herstellen der mindestens einen Wandung wird das primäre Bauteil 2 mit seiner ersten ausgedehnten Oberfläche 6 voran, auf der die Bahnen 14 des kühlmittelbeständigen Klebstoffs und davon getrennt die Bahnen 16 des strukturfestigenden Klebstoffs aufgetragen sind, auf der glatten Oberfläche 10 des sekundären Bauteils 4 angeordnet, wobei die ausgedehnte glatte Oberfläche 10 des sekundären Bauteils 4 von der ersten Oberfläche 6 des primären Bauteils 2 bzw. von dem primären Bauteil 2 nur teilweise abgedeckt wird, da hier die Oberfläche 10 des sekundären Bauteils 4 größer als die erste bzw. zweite Oberfläche 6, 8 des primären Bauteils 2 ist.

Nachdem das primäre Bauteil 2 auf dem sekundären Bauteil 4 angeordnet worden ist, härten die beiden unterschiedlichen Klebstoffe aus. Dadurch ergibt sich, dass durch die Linien 14 aus kühlmittelbeständigem Klebstoff eine Innenwand des Kühlmittelkanals begrenzt wird, wobei die Linien 14 aus dem kühlmittelbeständigen Klebstoff den Kühlmittelkanal abdichten. Durch den strukturfestigenden Klebstoff entlang der Linien 16, die sich zwischen den Oberflächen 6, 10 beider Bauteile 2, 4 befinden, werden die beiden Bauteile 2, 4 auch mechanisch fest miteinander verbunden. Je nach Definition bilden hier das sekundäre Bauteil 4 und die als Außenwände ausgebildeten Wandungen bzw. Wandabschnitte 12 Innenteile eines Gehäuses zur Aufnahme einer Batterie, wohingegen das auf dem sekundären Bauteil 4 angeordnete primäre Bauteil 2 ein Außenteil des Gehäuses sowie einer Wandung dieses Gehäuses bildet, die durch das primäre Bauteil 2 und das sekundäre Bauteil 4 begrenzt ist, zwischen denen sich die mit dem kühlmittelbeständigen Klebstoff abgedichteten Kühlkanäle befinden.

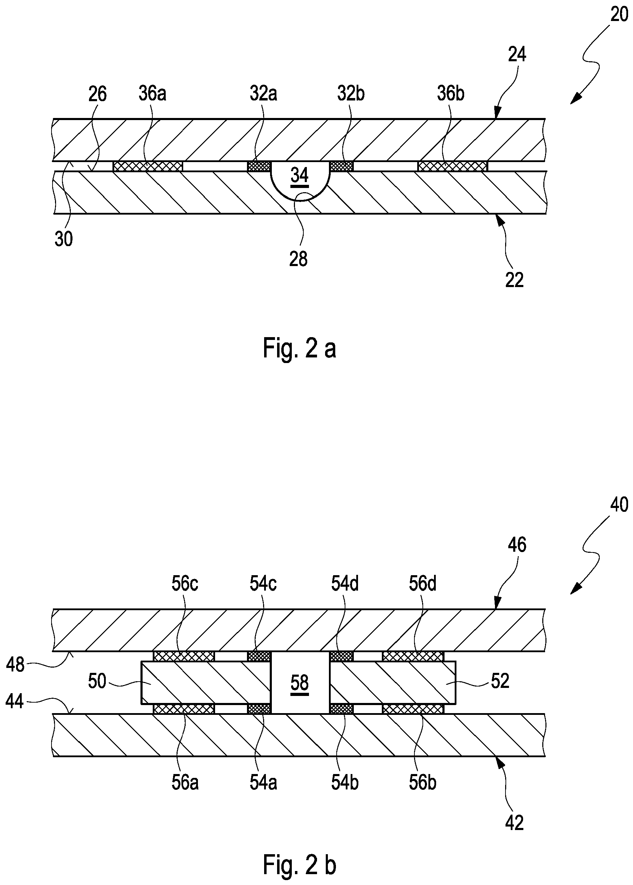

Figur 2a zeigt in Ausgestaltung ein Detail der Wandung 20 der zweiten Ausführungsform des erfindungsgemäßen Kühlsystems. Diese Wandung 20 umfasst ein primäres Bauteil 22 und ein sekundäres Bauteil 24. Dabei ist in eine ausgedehnte Oberfläche 26 des primären Bauteils 22 eine Ausnehmung 28 eingebracht, wohingegen eine Oberfläche 30 des sekundären Bauteils 24 eben bzw. flach ist.

Figur 2a zeigt auch eine erste Dichtung 32a und eine zweite Dichtung 32b, die beide beim Herstellen der Wandung 20 der zweiten Ausführungsform des Kühlsystems aus einem kühlmittelbeständigen Klebstoff gebildet werden. Dabei ist vorgesehen, dass an Rändern der Ausnehmung 28 entlang einer ersten hier als Linie ausgebildeten Bahn und einer zweiten hier als Linie ausgebildeten Bahn der kühlmittelbeständige Klebstoff aufgetragen wird. Außerdem wird auf der Oberfläche 26 des primären Bauteils 22 an weiteren Stellen, die von den Stellen für den kühlmittelbeständigen Klebstoff getrennt sind, strukturfestigender Klebstoff aufgetragen. Nach Auftragen der beiden unterschiedlichen Sorten Klebstoff werden die beiden Oberseiten 26, 30 der beiden Bauteile 22, 24 einander zugewandt sowie aufeinander gelegt bzw. angeordnet. Nach Aushärten der Klebstoffe bilden sich an Rändern der Ausnehmung 28 die Dichtungen 32a, 32b. Dabei wird eine Innenwand eines Kühlmittelkanals 34 durch die Ausnehmung 28 in der ausgedehnten Oberfläche des primären Bauteils 22 durch einen Abschnitt auf der Oberfläche 28 des sekundären Bauteils 24 sowie durch die beiden Dichtungen 32a, 32b begrenzt. Außerdem werden nach Aushärten des strukturfestigenden Klebstoffs zwischen den Oberflächen 26, 30 hier zwei Befestigungsstellen 36a, 36b gebildet, die jedoch von den Dichtungen 32a, 32b aus dem kühlmittelbeständigen Klebstoff getrennt sind.

Das Detail der Wandung 40 der dritten Ausführungsform des erfindungsgemäßen Kühlsystems ist in Figur 2b schematisch dargestellt. Dabei zeigt Figur 2b ebenfalls ein primäres Bauteil 42 mit einer ausgedehnten Oberfläche 44, ein erstes sekundäres Bauteil 46 sowie ein zweites und ein drittes sekundäres Bauteil 50, 52, die hier als Abstandshalter zwischen dem primären Bauteil 42 und dem ersten sekundären Bauteil 46 ausgebildet sind. Zum Herstellen der Wandung 40 für die dritte Ausführungsform des Kühlsystems wird hier an ersten Stellen der Oberflächen 44, 48 des primären Bauteils 42 und des ersten sekundären Bauteils 46 kühlmittelbeständiger Klebstoff aufgebracht. Außerdem wird an zweiten Stellen beider Oberflächen 44, 48, die von den ersten Stellen für den kühlmittelbeständigen Klebstoff getrennt sind, strukturfestigender Klebstoff aufgetragen. Danach werden die als Abstandshalter ausgebildeten sekundären Bauteile 50, 52 auf der ausgedehnten Oberfläche des primären Bauteils 42 angeordnet. Außerdem wird danach auf den beiden weiteren sekundären Bauteilen 50, 52 das erste sekundäre Bauteil 46 angeordnet, wobei das zweite und das dritte sekundäre Bauteil 50, 52 zwischen dem primären Bauteil 42 und dem ersten sekundären Bauteil 46 angeordnet werden.

Nach Aushärten der beiden unterschiedlichen Klebstoffe werden zwischen der Oberfläche 44 des primären Bauteils 42 und Oberflächen des zweiten und des dritten sekundären Bauteils 50, 52 erste Dichtungen 54a, 54b sowie weiterhin zwischen der Oberfläche 48 des ersten sekundären Bauteils 46 und den beiden weiteren sekundären Bauteilen 50, 52 weitere Dichtungen 54c, 54d aus dem kühlmittelbeständigen Klebstoff gebildet. Ergänzend werden an den zweiten Stellen, auf denen der strukturfestigende Klebstoff aufgetragen wurde bzw. worden ist, nach dessen Aushärtung Befestigungsstellen 56a, 56b, 56c, 56d aus dem strukturfestigenden Klebstoff gebildet, die von den Dichtungen 54a, 54b, 54c, 54d des kühlmittelbeständigen Klebstoffs getrennt sind. Im Detail befindet sich zwischen dem primären Bauteil 42 und dem zweiten sekundären Bauteil 50 eine erste Befestigungsstelle 56a, zwischen dem primären Bauteil 42 und dem dritten sekundären Bauteil 52 eine zweite Befestigungsstelle 56b, zwischen dem zweiten sekundären Bauteil 46 und dem dritten sekundären Bauteil 50 eine dritte Befestigungsstelle 56c und zwischen dem ersten sekundären Bauteil 46 und dem dritten sekundären Bauteil 52 eine vierte Befestigungsstelle 56d, wobei diese Befestigungsstellen 56a, 56b, 56c, 56d aus dem strukturfestigenden Klebstoff die genannten Bauteile 42, 46, 50, 52 mechanisch miteinander bzw. aneinander befestigen. Figur 2b zeigt auch, dass das primäre Bauteil 42 sowie alle drei sekundären Bauteile 50, 52, 54 einen Kühlmittelkanal 58 umschließen, der durch die Dichtungen 54a, 54b, 54c, 54d zwischen den Bauteilen 42, 46, 50, 52 abgedichtet ist.

## Patentansprüche

1. Verfahren zum Herstellen mindestens einer Wandung (20, 40) eines Kühlsystems für mindestens eine Batterie, bei dem ein primäres Bauteil (2, 22, 42) und mindestens ein sekundäres Bauteil (4, 24, 46, 50, 52) verwendet werden, die beide Oberflächen (6, 8, 10, 26, 30, 44, 48) aufweisen, wobei auf mindestens einer ersten Stelle einer Oberfläche mindestens eines der Bauteile (2, 4, 22, 24, 42, 46, 50, 52) ein kühlmittelbeständiger und kühlmitteldichter Klebstoff aufgetragen wird, wobei auf mindestens einer zweiten Stelle der Oberfläche (6, 8, 10, 26, 30, 44, 48) mindestens eines der Bauteile (2, 4, 22, 24, 42, 46, 50, 52) ein strukturfestigender Klebstoff aufgetragen wird, wobei das primäre Bauteil (2, 22, 42) und das mindestens eine sekundäre Bauteil (4, 24, 46, 50, 52) aneinandergefügt und über beide Klebstoffe miteinander verklebt werden, wobei die Bauteile (2, 4, 22, 24, 42, 46, 50, 52) zu der mindestens einen Wandung (20, 40) verbunden werden, wobei durch jeweils eines der Bauteile (2, 4, 22, 24, 42, 46, 50, 52) je ein Abschnitt einer Innenwand mindestens eines Kühlmittelkanals (34, 58) des Kühlsystems bereitgestellt wird, der durch die Bauteile (2, 4, 22, 24, 42, 46, 50, 52) begrenzt und durch den kühlmittelbeständigen und kühlmitteldichten Klebstoff als Dichtung (32a, 32b, 54a, 54b) abgedichtet wird, **dadurch gekennzeichnet, dass** die Bauteile (2, 4, 22, 24, 42, 46, 50, 52) unabhängig von dem kühlmittelbeständigen und kühlmitteldichten Klebstoff über den strukturfestigenden Klebstoff aneinander mechanisch befestigt werden, wobei aus dem strukturfestigenden Klebstoff nach einem Aushärten mechanisch stabile Befestigungsstellen (36a, 36b, 56a, 56b, 56c, 56d) gebildet werden, wobei ein primäres Bauteil (2, 22, 42), das eine ausgedehnte Oberfläche (6, 26, 44) aufweist, und ein erstes sekundäres Bauteil (4, 24, 46), das eine ausgedehnte Oberfläche (10, 30, 48) aufweist, verwendet werden, wobei mindestens ein zweites sekundäres Bauteil (50, 52) verwendet wird, das als Abstandshalter zwischen dem primären Bauteil (2, 22, 42) und dem ersten sekundären Bauteil (6, 24, 46) verwendet wird, das einerseits mit dem primären Bauteil (2, 22, 42) über den kühlmittelbeständigen und kühlmitteldichten Klebstoff verklebt und andererseits über den kühlmittelbeständigen und kühlmitteldichten Klebstoff mit dem ersten sekundären Bauteil (6, 24, 46) verklebt wird, wobei der mindestens eine Abschnitt der Innenwand des mindestens einen Kühlmittelkanals (34, 58) durch das zweite sekundäre Bauteil (50, 52) und den kühlmittelbeständigen und kühlmitteldichten Klebstoff zwischen jeweils zwei Bauteilen (2, 4, 22, 24, 42, 46, 50, 52) begrenzt wird.

2. Verfahren nach Anspruch 1, bei dem die mindestens eine erste Stelle und die mindestens eine zweite Stelle sowohl bei einem Auftragen der Klebstoffe als auch bei einem Aneinanderfügen der Bauteile (2, 4, 22, 24, 42, 46, 50, 52) voneinander beabstandet werden.

3. Verfahren nach Anspruch 1 oder 2, bei dem der Abschnitt der Innenwand, der zum Begrenzen des mindestens einen Kühlmittelkanals (34, 58) vorgesehen ist, zunächst in die Oberfläche (4, 6, 26, 30, 44, 48) mindestens eines der beiden Bauteile (2, 4, 22, 24, 46) als Ausnehmung eingebracht wird, wobei der kühlmittelbeständige Klebstoff entlang von Rändern des Abschnitts der Innenwand bzw. der Ausnehmung aufgetragen wird.

4. Verfahren nach einem der voranstehenden Ansprüche, bei dem mindestens eines der beiden Bauteile (2, 4, 22, 24, 42, 46) als eine Innenwand eines Gehäuses verwendet wird, in dem die mindestens eine Batterie angeordnet wird, wohingegen das andere der beiden Bauteile als Abdeckung des Gehäuses verwendet wird.

5. Verfahren nach einem der voranstehenden Ansprüche, bei dem das mindestens eine zweite sekundäre Bauteil (50, 52) und mindestens eines der beiden weiteren Bauteile (2, 4, 22, 24, 42, 46) zusätzlich über den strukturfestigenden Klebstoff miteinander verklebt und somit miteinander verbunden werden.

6. Kühlsystem für mindestens eine Batterie, das mindestens eine Wandung (20, 40) aufweist, die ein primäres Bauteil (2, 22, 42) und mindestens ein sekundäres Bauteil (4, 24, 46, 50, 52) aufweist, wobei das primäre Bauteil (2, 22, 42) und das mindestens eine sekundäre Bauteil (4, 24, 46, 50, 52) aneinandergefügt und über zwei Klebstoffe miteinander verklebt sind, wobei an mindestens einer ersten Stelle zwischen den mindestens zwei Bauteilen (2, 4, 22, 24, 42, 46, 50, 52) ein kühlmittelbeständiger und kühlmitteldichter Klebstoff angeordnet ist, wobei an mindestens einer zweiten Stelle zwischen den mindestens zwei Bauteilen (2, 4, 22, 24, 42, 46, 50, 52) ein strukturfestigender Klebstoff angeordnet ist, wobei durch jeweils eines der Bauteile (2, 4, 22, 24, 42, 46, 50, 52) je ein Abschnitt einer Innenwand mindestens eines Kühlmittelkanals (34, 58) des Kühlsystems bereitgestellt wird, der durch die Abschnitte der Bauteile (2, 4, 22, 24, 42, 46, 50, 52) begrenzt und durch den kühlmittelbeständigen und kühlmitteldichten Klebstoff als Dichtung (32a, 32b, 54a, 54b) abgedichtet ist, **dadurch gekennzeichnet, dass** die Bauteile (2, 4, 22, 24, 42, 46, 50, 52) unabhängig von dem kühlmittelbeständigen und kühlmitteldichten Klebstoff über den strukturfestigenden Klebstoff aneinander mechanisch befestigt sind, wobei aus dem strukturfestigenden Klebstoff nach einem Aushärten mechanisch stabile Befestigungsstellen (36a, 36b, 56a, 56b, 56c, 56d) gebildet werden, wobei ein primäres Bauteil (2, 22, 42), das eine ausgedehnte Oberfläche (6, 26, 44) aufweist, und ein erstes sekundäres Bauteil (4, 24, 46), das eine ausgedehnte Oberfläche (10, 30, 48) aufweist, verwendet werden, wobei mindestens ein zweites sekundäres Bauteil (50, 52) verwendet wird, das als Abstandshalter zwischen dem primären Bauteil (2, 22, 42) und dem ersten sekundären Bauteil (6, 24, 46) verwendet wird, das einerseits mit dem primären Bauteil (2, 22, 42) über den kühlmittelbeständigen und kühlmitteldichten Klebstoff verklebt und andererseits über den kühlmittelbeständigen und kühlmitteldichten Klebstoff mit dem ersten sekundären Bauteil (6, 24, 46) verklebt wird, wobei der mindestens eine Abschnitt der Innenwand des mindestens einen Kühlmittelkanals (34, 58) durch das zweite sekundäre Bauteil (50, 52) und den kühlmittelbeständigen und kühlmitteldichten Klebstoff zwischen jeweils zwei Bauteilen (2, 4, 22, 24, 42, 46, 50, 52) begrenzt wird.

7. Kühlsystem nach Anspruch 6, das mehrere miteinander verbundene Wandungen (20, 40) aufweist, die dazu ausgebildet sind, die mindestens eine Batterie zu umschließen.

## Claims

1. Method for producing at least one wall (20, 40) of a cooling system for at least one battery, in which a primary component (2, 22, 42) and at least one secondary component (4, 24, 46, 50, 52) are used which both have surfaces (6, 8, 10, 26, 30, 44, 48), wherein a coolant-resistant and coolant-proof adhesive is applied onto at least one first point of a surface of at least one of the components (2, 4, 22, 24, 42, 46, 50, 52), wherein a structure-strengthening adhesive is applied onto at least one second point of the surface (6, 8, 10, 26, 30, 44, 48) of at least one of the components (2, 4, 22, 24, 42, 46, 50, 52), wherein the primary component (2, 22, 42) and the at least one secondary component (4, 24, 46, 50, 52) are joined to one another and are adhered to one another by both adhesives, wherein the components (2, 4, 22, 24, 42, 46, 50, 52) are joined to the at least one wall (20, 40), wherein a respective section of an inner wall of at least one coolant channel (34, 58) of the cooling system is provided by one of the components (2, 4, 22, 24, 42, 46, 50, 52) respectviely, which is delimited by the components (2, 4, 22, 24, 42, 46, 50, 52) and sealed by the coolant-resistant and coolant-proof adhesive as a seal (32a, 32b, 54a, 54b), **characterised in that** the components (2, 4, 22, 24, 42, 46, 50, 52) are connected to one another mechanically independently of the coolant-resistant and coolant-proof adhesive via the structure-strengthening adhesive, wherein from the structure-strengthening adhesive after curing mechanically stable fastening points (36a, 36b, 56a, 56b, 56c, 56d) are formed, wherein a primary component (2, 22, 42) having an extended surface (6, 26, 44) and a first secondary component (4, 24, 46) having an extended surface, and a first secondary component having an extended surface (10, 30, 48) are used, wherein at least one second secondary component (50, 52) is used which is used as a spacer between the primary component (2, 22, 42) and the first secondary component (6, 24, 46), which on the one hand is adhered to the primary component (2, 22, 42) by the coolant-resistant and coolant-proof adhesive and on the other hand is adhered to the first secondary compoent (6, 24, 46) by the coolant-resistant and coolant-proof adhesive, wherein the at least one section of the inner wall of the at least one coolant duct (34, 58) is delimited by the second secondary component (50, 52) and the coolant-resistant and coolant-proof adhesive between two components (2, 4, 22, 24, 42, 46, 50, 52) respectively.

2. Method according to claim 1, wherein the at least one first point and the at least one second point are spaced apart from one another both on application of the adhesives and on joining together the components (2, 4, 22, 24, 42, 46, 50, 52).

3. Method according to claim 1 or 2, wherein the section of the inner wall which is provided for delimiting the at least one coolant channel (34, 58), is introduced firstly into the surface (4, 6, 26, 30, 44, 48) of at least one of the two components (2, 4, 22, 24, 46) as a recess, wherein the coolant-resistant adhesive is applied along edges of the section of the inner wall or the recess respectively.

4. Method according to any of the preceding claims, wherein at least one of the two components (2, 4, 22, 24, 42, 46) is used as an inner wall of a housing, in which the at least one battery is arranged, whereas the other of the two components is used as a cover of the housing.

5. Method according to any of the preceding claims, wherein the at least one second secondary component (50, 52) and at least one of the two further components (2, 4, 22, 24, 42, 46) are additionally adhered to one another via the structure-strengthening adhesive and are thus bonded to one another.

6. Cooling system for at least one battery which has at least one wall (20, 40) which has a primary component (2, 22, 42) and at least one secondary component (4, 24, 46, 50, 52), wherein the primary component (2, 22, 42) and the at least one secondary component (4, 24, 46, 50, 52) are joined to one another and are adhered to one another via two adhesives, wherein a coolant-resistant and coolant-proof adhesive is arranged on at least one first point between the at least two components (2, 4, 22, 24, 42, 46, 50, 52), wherein a structure-strengthening adhesive is arranged on at least one second point between the at least two components (2, 4, 22, 24, 42, 46, 50, 52), wherein by each of the components (2, 4, 22, 24, 42, 46, 50, 52) respectviely a section of an inner wall of at least one coolant channel (34, 58) of the cooling system is provided, which is delimited by the sections of the components (2, 4, 22, 24, 42, 46, 50, 52) and is sealed by the coolant-resistant and coolant-proof adhesive as a seal (32a, 32b, 54a, 54b), **characterised in that** the components (2, 4, 22, 24, 42, 46, 50, 52) are fastened to one another mechanically independently of the coolant-resistant and coolant-proof adhesive via the structure-strengthening adhesive, wherein from the structure-strengthening adhesive after curing mechanically stable securing points (36a, 36b, 56a, 56b, 56c, 56d) are formed, wherein a primary component (2, 22, 42), which has an extended surface (6, 26, 44), and a first secondary component (4, 24, 46), which has an extended surface (10, 30, 48) are used, wherein at least one second secondary component (50, 52) is used which is used as a spacer between the primary component (2, 22, 42) and the first secondary component (6, 24, 46), which is adhered on the one hand to the primary component (2, 22, 42) via the coolant-resistant and coolant-proof adhesive and on the other hand via the coolant-resistant and coolant-proof adhesive to the first secondary component (6, 24, 46), wherein the at least one section of the inner wall of the at least one coolant channel (34, 58) is delimited by the second secondary component (50, 52) and the coolant-resistant and coolant-proof adhesive between two components (2, 4, 22, 24, 42, 46, 50, 52) respectively.

7. Cooling system according to claim 6, which has a plurality of interconnected walls (20, 40) which are configured to enclose the at least one battery.

## Revendications

1. Procédé de fabrication d'au moins une paroi (20, 40) d'un système de refroidissement pour au moins une batterie, dans lequel un composant primaire (2, 22, 42) et au moins un composant secondaire (4, 24, 46, 50, 52) sont utilisés, qui présentent tous deux des surfaces (6, 8, 10, 26, 30, 44, 48), dans lequel un adhésif résistant aux réfrigérants et étanche aux réfrigérants est appliqué sur au moins un premier emplacement d'une surface d'au moins un des composants (2, 4, 22, 24, 42, 46, 50, 52), dans lequel un adhésif de renforcement de structure est appliqué sur au moins un second emplacement de la surface (6, 8, 10, 26, 30, 44, 48) d'au moins un des composants (2, 4, 22, 24, 42, 46, 50, 52), dans lequel le composant primaire (2, 22, 42) et l'au moins un composant secondaire (4, 24, 46, 50, 52) sont assemblés l'un à l'autre et collés l'un à l'autre par l'intermédiaire des deux adhésifs, dans lequel les composants (2, 4, 22, 24, 42, 46, 50, 52) sont connectés pour l'au moins une paroi (20, 40), dans lequel une section respective d'une paroi intérieure d'au moins un canal de réfrigérant (34, 58) du système de refroidissement est prévue par l'intermédiaire respectivement d'un des composants (2, 4, 22, 24, 42, 46, 50, 52), qui est délimitée par les composants (2, 4, 22, 24, 42, 46, 50, 52) et rendue étanche par l'adhésif résistant aux réfrigérants et étanche aux réfrigérants en tant que joint (32a, 32b, 54a, 54b), **caractérisé en ce que** les composants (2, 4, 22, 24, 42, 46, 50, 52) sont fixés mécaniquement les uns aux autres par l'intermédiaire de l'adhésif de renforcement de structure, indépendamment de l'adhésif résistant aux réfrigérants et étanche aux réfrigérants, dans lequel des points de fixation mécaniquement stables (36a, 36b, 56a, 56b, 56c, 56d) sont formés à partir de l'adhésif de renforcement de structure après un durcissement, dans lequel un composant primaire (2, 22, 42) qui présente une surface étendue (6, 26, 44) et un premier composant secondaire (4, 24, 46) qui présent une surface étendue (10, 30, 48), sont utilisés, dans lequel au moins un second composant secondaire (50, 52) est utilisé, qui est utilisé en tant qu'espaceur entre le composant primaire (2, 22, 42) et le premier composant secondaire (6, 24, 46), qui est, d'une part, collé au composant primaire (2, 22, 42) par l'intermédiaire de l'adhésif résistant aux réfrigérants et étanche aux réfrigérants et est, d'autre part, collé au premier composant secondaire (6, 24, 46) par l'intermédiaire de l'adhésif résistant aux réfrigérants et étanche aux réfrigérants, dans lequel l'au moins une section de la paroi intérieure de l'au moins un canal de réfrigérant (34, 58) est délimitée par le second composant secondaire (50, 52) et l'adhésif résistant aux réfrigérants et étanche aux réfrigérants respectivement entre deux composants (2, 4, 22, 24, 42, 46, 50, 52).

2. Procédé selon la revendication 1, dans lequel l'au moins un premier emplacement et l'au moins un second emplacement sont espacés l'un de l'autre aussi bien lors d'une application des adhésifs que lors d'un assemblage des composants (2, 4, 22, 24, 42, 46, 50, 52).

3. Procédé selon la revendication 1 ou 2, dans lequel la section de la paroi intérieure, qui est prévue pour délimiter l'au moins un canal de réfrigérant (34, 58), est d'abord introduite dans la surface (4, 6, 26, 30, 44, 48) d'au moins un des deux composants (2, 4, 22, 24, 46) en tant qu'évidement, dans lequel l'adhésif résistant aux réfrigérants est appliqué le long des bords de la section de la paroi intérieure ou de l'évidement.

4. Procédé selon l'une quelconque des revendications précédentes, dans lequel au moins un des deux composants (2, 4, 22, 24, 42, 46) est utilisé en tant que paroi intérieure d'un boîtier dans lequel l'au moins une batterie est disposée, tandis que l'autre des deux composants est utilisé en tant que couvercle du boîtier.

5. Procédé selon l'une quelconque des revendications précédentes, dans lequel l'au moins un second composant secondaire (50, 52) et au moins un des deux autres composants (2, 4, 22, 24, 42, 46) sont en outre collés l'un à l'autre par l'intermédiaire de l'adhésif de renforcement de structure et sont ainsi connectés entre eux.

6. Système de refroidissement pour au moins une batterie, qui présente au moins une paroi (20, 40,) qui présente un composant primaire (2, 22, 42) et au moins un composant secondaire (4, 24, 46, 50, 52), dans lequel le composant primaire (2, 22, 42) et l'au moins un composant secondaire (4, 24, 46, 50, 52) sont assemblés l'un à l'autre et collés l'un à l'autre par l'intermédiaire de deux adhésifs, dans lequel un adhésif résistant aux réfrigérants et étanche aux réfrigérants est disposé à au moins un premier emplacement entre les au moins deux composants (2, 4, 22, 24, 42, 46, 50, 52), dans lequel un adhésif de renforcement de structure est disposé à au moins un second emplacement entre les au moins deux composants (2, 4, 22, 24, 42, 46, 50, 52), dans lequel une section respective d'une paroi intérieure d'au moins un canal de réfrigérant (34, 58) du système de refroidissement est prévue par l'intermédiaire respectivement d'un des composants (2, 4, 22, 24, 42, 46, 50, 52), qui est délimitée par les sections des composants (2, 4, 22, 24, 42, 46, 50, 52) et rendue étanche par l'adhésif résistant aux réfrigérants et étanche aux réfrigérants en tant que joint (32a, 32b, 54a, 54b), **caractérisé en ce que** les composants (2, 4, 22, 24, 42, 46, 50, 52) sont fixés mécaniquement les uns aux autres par l'intermédiaire de l'adhésif de renforcement de structure, indépendamment de l'adhésif résistant aux réfrigérants et étanche aux réfrigérants, dans lequel des points de fixation mécaniquement stables (36a, 36b, 56a, 56b, 56c, 56d) sont formés à partir de l'adhésif de renforcement de structure après un durcissement, dans lequel un composant primaire (2, 22, 42) qui présente une surface étendue (6, 26, 44) et un premier composant secondaire (4, 24, 46) qui présent une surface étendue (10, 30, 48), sont utilisés, dans lequel au moins un second composant secondaire (50, 52) est utilisé, qui est utilisé en tant qu'espaceur entre le composant primaire (2, 22, 42) et le premier composant secondaire (6, 24, 46), qui est, d'une part, collé au composant primaire (2, 22, 42) par l'intermédiaire de l'adhésif résistant aux réfrigérants et étanche aux réfrigérants et est, d'autre part, collé au premier composant secondaire (6, 24, 46) par l'intermédiaire de l'adhésif résistant aux réfrigérants et étanche aux réfrigérants, dans lequel l'au moins une section de la paroi intérieure de l'au moins un canal de réfrigérant (34, 58) est délimitée par le second composant secondaire (50, 52) et l'adhésif résistant aux réfrigérants et étanche aux réfrigérants respectivement entre deux composants (2, 4, 22, 24, 42, 46, 50, 52).

7. Système de refroidissement selon la revendication 6, qui présente plusieurs parois (20, 40) connectées entre elles, qui sont conçues pour renfermer l'au moins une batterie.
